# EUROPÄISCHE PATENTSCHRIFT

(11) **EP 0 719 678 B1**
(45) Veröffentlichungstag und Bekanntmachung des Hinweises auf die Patenterteilung: **23.06.1999**
(21) Anmeldenummer: 95120074.0
(22) Anmeldetag: 19.12.1995
(51) Int. Cl.: B60R 21/20

(54) **Befestigung eines Airbagmoduls**
Mounting of an airbag module
Fixation d'un module pour coussin d'air

(30) Priorität: 29.12.1994 DE 4447045
(43) Veröffentlichungstag der Anmeldung: 03.07.1996
(73) Patentinhaber: MST Automotive GmbH Automobil-Sicherheitstechnik, 63743 Aschaffenburg (DE)
(72) Erfinder: Bathon, Michael, D-63811 Stockstadt (DE); Zang, Jürgen, D-63762 Gossostheim (DE); Weiss, Franz-Xaver, D-63739 Aschaffenburg (DE)
(74) Vertreter: Degwert, Hartmut, Dipl.-Phys.

(56) Entgegenhaltungen:
- EP-A- 0 520 537
- EP-A- 0 619 204
- US-A- 5 364 124

## Beschreibung

Die Erfindung betrifft die Befestigung eines auf der Beifahrerseite eines Kraftfahrzeugs in einer entsprechend gestalteten Öffnung der Armaturentafel eingesetzten, mit einer hinter der Öffnung fahrzeugfest angebrachten Halterung, vorzugsweise einem Blechrahmen, verbundenen Airbag-Moduls, bei dem an dem quer zur Fahrzeugachse verlaufenden, nach unten und nach oben weisenden Abschnitt des Außenflansches des Gasgeneratorträgers jeweils ein mit der fahrzeugfesten Halterung verbundenes Halteblech befestigt ist, wobei an dem oberen Halteblech wenigstens ein in ein korrespondierendes Durchgangsloch der fahrzeugfesten Halterung eingerasteter Montagebolzen angeordnet und das untere Halteblech mit der fahrzeugfesten Halterung verschraubt ist.

Eine derartige Befestigung eines Airbag-Moduls auf der Beifahrerseite eines Kraftfährzeugs ist heute üblich, da eine solche Verbindung eine relativ einfache und schnelle Montage des Airbag-Moduls erlaubt (EP-A- 0 619 204). Es ist jedoch von Nachteil, daß im Falle eines Auslösens des Airbag-Moduls hohe Massenkräfte auftreten, die über die Verbindung des Gassacks mit dem Gasgeneratorträger und die Haltebleche eine hohe Belastung der Verbindung der Haltebleche mit der fahrzeugfesten Halterung hervorrufen, mit der Folge, daß der mit dem nach oben weisenden Halteblech verbundene Montagebolzen aus dem Durchgangsloch der Halterung ausrastet und in den Fahrgastraum fallen kann, wodurch ggf. Verletzungen des beifahrerseitigen Fahrzeuginsassen hervorgerufen werden.

Es ist Aufgabe der vorliegenden Erfindung, die eingangs beschriebene Befestigung eines Airbag-Moduls auf der Beifahrerseite eines Kraftfährzeugs so auszubilden, daß ein Ausrasten des an dem nach oben weisenden Halteblech befestigten Montagebolzens aus dem Durchgangsloch der fahrzeugfesten Halterung mit Sicherheit verhindert wird.

Die Lösung dieser Aufgabe besteht darin, daß der Montagebolzen eine Ausnehmung aufweist und mit einem dünnwandigen Kunststoffmantel überzogen ist. Im Falle einer Belastung des Montagebolzens durch Massenkräfte als Folge des Auslösens des Airbag-Moduls wird der Kunststoffmantel durch den Rand des Durchgangslochs der fahrzeugfesten Halterung zerstört und der Montagebolzen verhakt sich mit der Ausnehmung am Rand des Durchgangslochs. Es ist somit gewährleistet, daß das Airbag-Modul sich nicht aus seiner oberen Befestigung lösen und in den Fahrgastraum fallen kann.

Die Ausnehmung des Montagebolzens besteht vorzugsweise aus einer Ringnute.

Nach einer weiteren Ausgestaltung ist der Montagebolzen mit zwei gegenüberliegenden, senkrecht zur Achse des Montagebolzens verlaufenden Quernuten versehen, mit denen sich der Montagebolzen am Rand des Durchgangslochs verhakt.

Im Rahmen der Ausbildung der Erfindung besitzt der vorzugsweise auf den Montagebolzen aufgeschrumpfte Kunststoffmantel eine Wanddicke von 0,5 bis 1,5 mm.

Um eine ausreichende Führung des Montagebolzens beim Einrasten in das Durchgangsloch der fahrzeugfesten Halterung zu erreichen, besitzt das Durchgangsloch zweckmäßigerweise einen in Einrastrichtung hochgezogenen Rand.

Die Erfindung ist nachstehend anhand eines Längsschnitts, der parallel zu der senkrecht durch die Fahrzeugachse verlaufenden Ebene geführt ist, näher und beispielhaft erläutert.

Hinter der Öffnung (1) der Armaturentafel (2) eines nicht dargestellten Personenkraftwagens ist ein als Halterung dienender Blechrahmen (3) mittels Schrauben (4) fest mit der Karosserie (5) verbunden. In die Öffnung (1) der Armaturentafel (2) ist ein Airbag-Modul (6) eingeschoben, bestehend aus einem aus Blech rechteckförmig tiefgezogenen Generatorträger (7), einem in diesem angeordneten, durch ein am Boden des Generatorträgers (7) mit Schrauben (8) befestigtes Schellenband (9) gehaltenen, rohrförmigen Gasgenerator (10), einem über dem Gasgenerator (10) liegenden eingefalteten Gassack (11) und einer diesen haubenförmig umschließenden, aus elastischem Kunststoff gebildeten Abdeckung (12). Die Außenkontur des Airbag-Moduls (6) ist der Geometrie der Armaturentafel (2) angepaßt. Der Rand (13) der Gaseintrittsöffnung des Gassacks (11) ist zwischen der Vorderseite des abgewinkelten Flanschs (14) des Gasgeneratorträgers (7) und einem Arretierungsblech (15) mittels durch entsprechende Durchbrechungen des Arretierblechs (15), des Gassacks (11) und des Flanschs (14) des Gasgeneratorträgers (7) gesteckte Schrauben (16) eingeklemmt. Zwischen den Muttern der Schrauben (16) und der Rückseite des abgewinkelten Flanschs (14) des Gasgeneratorträgers (7) sind zum Gasgeneratorträger (7) hin Montagebolzen (20), der in seinem oberen Abschnitt eine Ringnute (21) besitzt und der mit einer Kunststoffschicht (22) aus POM ummantelt ist, befestigt. Der Montagebolzen (20) ist in ein Durchgangsloch (23) des Blechrahmens (3) eingerastet. Das untere Halteblech (18 ist über Schrauben (24) mit dem Blechrahmen (3) verbunden. Der fahrzeugseitige Rand der Kunststoffabdeckung (12) für den Gassack (11) ist mittels Schrauben (25) an den Halteblechen (17, (18) befestigt. Der Rand (26) des Durchganglochs (23) ist in Einrastrichtung des Montagebolzens (20) hochgezogen.

Bei Auslösung des Airbag-Moduls (6) und der dadurch erfolgenden hohen Belastung des Montagebolzens (20) verhakt sich dieser mit seiner Ringnute (21) in dem hochgezogenen Rand (26) des Durchgangslochs (23) des Blechrahmens (3), wobei der hochgezogene Rand die Kunststoffummantelung (22) des Montagebolzens (20) bei der Ausrastbewegung zerstört.

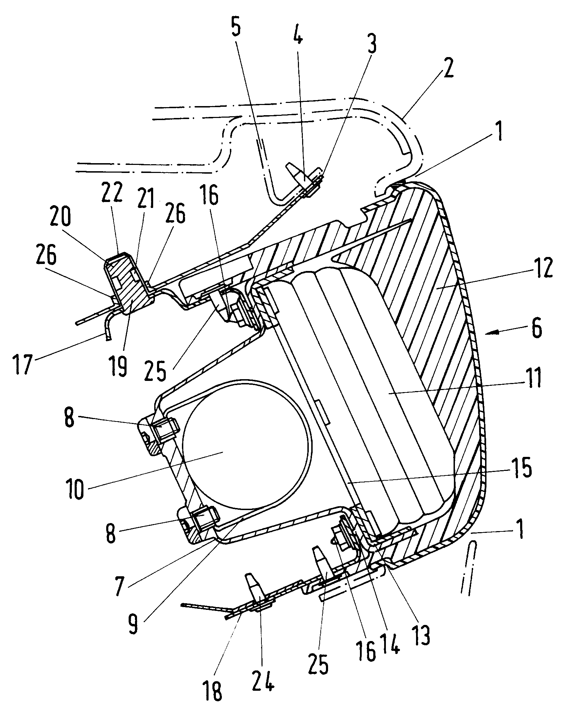

## Patentansprüche

1. Befestigung eines auf der Beifahrerseite eines Kraftfährzeugs in einer entsprechend gestalteten Öffnung (1) der Armaturentafel (2) eingesetzten, mit einer hinter der Öffnung fahrzeugfest angebrachten Halterung (3) verbundenen Airbag-Moduls (6), bei dem an dem quer zur Fahrzeugachse verlaufenden, nach unten und nach oben weisenden Abschnitt des Flansches (14) des Gasgeneratorträgers (7) jeweils ein mit der fahrzeugfesten Halterung verbundenes Halteblech (17, (18) befestigt ist, wobei an dem oberen Halteblech (17) wenigstens ein in ein korrespondierendes Durchgangsloch (23) der Halterung eingerasteter Montagebolzen (20) angeordnet und das untere Halteblech (18) mit der fahrzeugfesten Halterung verschraubt ist, dadurch gekennzeichnet, daß der Montagebolzen (20) eine Ausnehmung (21) besitzt und mit einer Kunststoffschicht (22) ummantelt ist.

2. Befestigung nach Anspruch 1, dadurch gekennzeichnet, daß die Ausnehmung (21) durch eine Ringnute gebildet ist.

3. Befestigung nach Anspruch 1, dadurch gekennzeichnet, daß die Ausnehmung (21) durch zwei gegenüberliegende, senkrecht zur Achse des Montagebolzens verlaufende Quernuten gebildet ist.

4. Befestigung nach einem der Ansprüche 1 bis 3, dadurch gekennzeichnet, daß die Dicke der Kunststoffschicht 0,5 bis 1,5 mm beträgt.

## Claims

1. An attachment of an air bag module (6), which is inserted on the passenger side of a motor vehicle in a correspondingly designed aperture (1) of the instrument panel (2) and is connected with a support (3) disposed in a vehicle-fixed manner behind the aperture, where on the section of the flange (14) of the inflator support (7) extending transversely to the vehicle axis and pointing upwards and downwards a respective holding plate (17, 18) is fixed, which is each connected with the vehicle-fixed support, at least one mounting bolt (20) being disposed on the upper holding plate (17) and being locked in place in a corresponding through hole (23) of the support, and the lower holding plate (18) being connected with the vehicle-fixed support by means of screws, characterized in that the mounting bolt (20) has a recess (21) and is encased in a plastic layer (22).

2. The attachment as claimed in claim 1, characterized in that the recess (21) is formed by an annular groove.

3. The attachment as claimed in claim 1, characterized in that the recess (21) is formed by two opposite transverse grooves extending perpendicularly to the axis of the mounting bolt.

4. The attachment as claimed in any one of claims 1 to 3, characterized in that the thickness of the plastic layer is 0.5 to 1.5 mm.

## Revendications

1. Fixation d'un module à sac à gaz (6) qui est logé sur le côté du voisin du conducteur d'un véhicule automobile dans une ouverture (1), conformée en conséquence, du tableau de bord (2) et qui est relié à un support (3) assujetti au véhicule derrière l'ouverture, fixation dans laquelle une tôle de retenue (17, 18) reliée au support solidaire du véhicule est fixée à la partie de la bride (14) du support (7) du générateur de gaz qui est orientée perpendiculairement à l'axe du véhicule et qui est tournée d'une part vers le haut et d'autre part vers le bas, au moins une cheville de montage (20) enclenchée dans un trou correspondant (23) du support étant disposée sur la tôle supérieure de retenue (17) et la tôle inférieure de retenue (18) étant boulonnée sur le support solidaire du véhicule, caractérisée en ce que la cheville de montage (20) comporte un évidement (21) et est enveloppée d'une couche de matière plastique (22).

2. Fixation selon la revendication 1, caractérisée en ce que l'évidement (21) est formé d'une rainure annulaire.

3. Fixation selon la revendication 1, caractérisée en ce que l'évidement (21) est formé de deux rainures transversales opposées qui sont perpendiculaires à l'axe de la cheville de montage.

4. Fixation selon l'une des revendications 1 à 3, caractérisée en ce que l'épaisseur de la couche de matière plastique est de 0,5 à 1,5 mm.
